# EUROPÄISCHE PATENTANMELDUNG

(11) **EP 4 311 947 A1**
(43) Veröffentlichungstag der Anmeldung: **31.01.2024**
(21) Anmeldenummer: 22187195.7
(22) Anmeldetag: 27.07.2022
(51) Int. Cl.: F16B 23/00

(54) **SCHRAUBE MIT KRAFTANGRIFF**

(71) Anmelder: SPAX International GmbH & Co. KG, 58256 Ennepetal (DE)
(72) Erfinder: LANGEWIESCHE, Frank, 45549 Sprockhövel (DE)
(74) Vertreter: Schneider, Sascha

(57) **Zusammenfassung**

Offenbart werden eine Schraube (1) mit einem Kraftangriff (3) sowie ein entsprechendes Betätigungswerkzeug und ein System aus einer erfindungsgemäßen Schraube und einem erfindungsgemäßen Betätigungswerkzeug.

## Beschreibung

Die nachfolgend beschriebene Erfindung betrifft eine Schraube mit einem Kraftangriff sowie ein Betätigungswerkzeug sowie ein System aus der Schraube und dem Betätigungswerkzeug gemäß den unabhängigen Patentansprüchen.

Schrauben mit einem Kraftangriff sind aus dem Stand der Technik bekannt. Sie weisen üblicherweise einen Zapfen auf, der zum verbesserten Halt des Betätigungswerkzeugs in der Schraube dient.

Allerdings hat sich herausgestellt, dass die Schrauben gemäß dem Stand der Technik erhebliche Nachteile aufweisen. Üblicherweise weist der Zapfen einen Durchmesser auf, der kleiner ist als der Durchmesser zwischen gegenüberliegenden Profilstücken des Kraftangriffs.

Seit einigen Jahren hat der Innensechsrund bei Schrauben des holzverarbeitenden Gewerbes Einzug gehalten. Dieser Innensechsrund-Kraftangriff hat wesentliche Vorteile, da er formschlüssig in Form eines Passsitzes funktioniert und der sogenannte Camout-Effekt nicht stattfinden kann.

Da ein solches System aus Schraube und Betätigungswerkzeug eine Passung darstellt, muss diese Passung mit Spiel ausgelegt werden. Ein leichtes Wackeln ist dabei nicht ausgeschlossen. Um einen besseren Passsitz zu erzielen und um das Wackeln oder auch Taumeln zu minimieren, wurden bereits Verbesserungen im Stand der Technik durchgeführt. Allerdings gibt es auch im Stand der Technik immer noch den Nachteil, dass eine zwingende axiale Position zwischen dem Werkzeug und der Schraube notwendig ist, da andernfalls es zu Fehlverschraubungen kommen kann.

Es kann bei der Handhabung leicht vorkommen, dass das Betätigungswerkzeug, insbesondere ein Bit, taumelt und/oder aus dem Kraftangriff der Schraube rutscht, so dass das Betätigungswerkzeug durchdreht und den Kraftangriff der Schraube beschädigen kann.

Als ein Beispiel für den Stand der Technik wird das Patent EP 1230489 B1 genannt.

Es ist daher die Aufgabe der vorliegenden Erfindung, die Nachteile des Stands der Technik zu beseitigen, zumindest zu verringern, und insbesondere einen verbesserten Kraftangriff zur Verfügung zu stellen.

Diese Aufgabe wird mit dem Gegenstand der unabhängigen Patentansprüche gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. In den angegebenen Wertebereichen sollen auch innerhalb der genannten Grenzen liegende Werte als Grenzwerte offenbart und in beliebiger Kombination beanspruchbar sein.

Die Erfindung betrifft eine Schraube, insbesondere eine Holzschraube, aufweisend einen Kopf mit einem Kraftangriff für ein Betätigungswerkzeug, wobei der Kraftangriff ein Sechsrundprofil aufweist, wobei das Sechsrundprofil einen Durchmesser D1 zwischen gegenüberliegend angeordneten Profilstücken aufweist, wobei der Kopf eine Aufnahmeöffnung für einen Zapfen des Betätigungswerkzeugs aufweist, wobei die Aufnahmeöffnung einen Durchmesser D2 aufweist, wobei der Durchmesser D2 der Aufnahmeöffnung größer ist als der Durchmesser des Sechsrundprofils D1.

Die Erfindung betrifft weiterhin ein Betätigungswerkzeug, insbesondere zur Betätigung einer erfindungsgemäßen Schraube, aufweisend ein Sechsrundprofil, wobei das Sechsrundprofil einen Durchmesser d1 zwischen gegenüberliegend angeordneten Ausnehmungen aufweist, wobei das Betätigungswerkzeug einen Zapfen aufweist, wobei der Zapfen einen Durchmesser d2 aufweist, wobei der Durchmesser d2 des Zapfens größer ist als der Durchmesser d1 des Sechsrundprofils.

Die Erfindung betrifft weiterhin ein System aus einer erfindungsgemäßen Schraube und einem erfindungsgemäßen Werkzeug.

Erfindungsgemäß ist es vorteilhaft möglich, die Gefahr des unsauberen Verschraubens wesentlich zu verhindern. Dies geschieht erfindungsgemäß dadurch, dass der Durchmesser des Zapfens größer ist als der kleinste Durchmesser des formschlüssigen Profils des Kraftangriffs.

Insbesondere erstreckt sich das Innenprofil auch auf den Zapfen und fungiert als Führungsprofil.

Dadurch wird der Zapfen besser in die Öffnung des Kraftangriffs eingeführt, um einen sauberen axialen Passsitz für eine optimale Verschraubung zu erhalten.

Die Gefahr des nicht-axialen/unsauberen Verschraubens wird minimiert.

Weiter von Vorteil ist es insbesondere, am vorderen Ende der Zapfenführung einen tangentenstetigen Übergang in eine abgerundete Form auszuführen, zum Beispiel in eine Kugel.

Bevorzugt ist es vorgesehen, dass im Durchmesser D2 tangentenstetig eine kugelförmige Spitze ansetzt.

Vorteilhaft ist es insbesondere möglich, dass das Betätigungswerkzeug, insbesondere der Bit, von Beginn an bis in die Aufnahmeöffnung geführt werden kann und es nicht dazu kommt, dass sich der Zapfen des Betätigungswerkzeugs, beziehungsweise des Bits, am Übergang des Innensechsrundprofils zur Führungsaufnahme des Kraftangriffs der Schraube abstützen kann und es dadurch zu einem nicht optimalen Passsitz von Kraftangriff der Schraube und Betätigungswerkzeug kommen kann.

Bei der Schraube kann es sich grundsätzlich um jegliche Art von Schrauben handeln. Insbesondere betrifft die Erfindung sogenannte Holzschrauben, die zur Verschraubung im Holz, insbesondere zur Verwendung in der Möbelindustrie oder holzverarbeitenden Industrie verwendet werden können.

Diese Schraube erstreckt sich entlang einer Längsachse L. Insbesondere erstreckt sich die Schraube entlang der Längsachse L von einem Kopf mit einem Kraftangriff aus hin zu einem vordersten Bereich, der insbesondere als Spitze ausgebildet sein kann. Anstelle einer Spitze kann auch ein stumpfer Abschluss, insbesondere ein kegelstumpfförmiger Abschluss ausgebildet sein.

Die Schraube beziehungsweise das Betätigungswerkzeug ist im Bereich des Kraftangriffs rotationssymmetrisch zur Längsachse ausgebildet. Die Schraube weist herkömmlicherweise ein Gewinde auf, das sich zwischen dem Kopf und dem vordersten Bereich erstreckt.

In einer bevorzugten Ausführungsform ist vorgesehen, dass die Aufnahmeöffnung zumindest teilweise rund, insbesondere elliptisch oder kugelförmig, ausgebildet ist. Dadurch kann vorteilhaft ein Verkanten des Betätigungswerkzeugs in der Aufnahmeöffnung verhindert werden.

In einer besonders bevorzugten Ausführungsform ist vorgesehen, dass die Aufnahmeöffnung bereichsweise kreiszylinderförmig ausgebildet ist, wobei sich ein kugelförmiger Bereich anschließt.

Bevorzugt ist weiterhin vorgesehen, dass die Aufnahmeöffnung im vordersten Bereich rund, insbesondere elliptisch oder kugelförmig, ausgebildet ist. Dadurch wird ein Verkanten des Betätigungswerkzeugs in der Aufnahmeöffnung besonders vorteilhaft verhindert.

In einer anderen bevorzugten Ausführungsform ist vorgesehen, dass sich die Profilstücke als Führungserhebungen in der Aufnahmeöffnung erstrecken. Dadurch ist es vorteilhaft möglich, dass das Betätigungswerkzeug und insbesondere der Zapfen bis in das Ende der Aufnahmeöffnung geleitet werden kann.

In einer bevorzugten Ausführungsform ist vorgesehen, dass die Führungserhebungen gleichmäßig über den Umfang der Aufnahmeöffnung verteilt angeordnet sind. Dadurch ist eine vorteilhafte gleichmäßige Abstützung des Zapfens möglich. Bevorzugt ist weiterhin vorgesehen, dass die Führungserhebungen in einem Umfangswinkel von 60° voneinander beabstandet sind.

Vorteilhaft korrespondieren die Führungserhebungen der Aufnahmeöffnung mit den Profilausnehmungen des Betätigungswerkzeugs des Zapfens, so dass eine optimale Führung gewährleistet werden kann.

In einer anderen bevorzugten Ausführungsform erstrecken sich die Führungserhebungen in Längsrichtung der Schraube bis hin zu einem vorderen Bereich der Aufnahmeöffnung, bevorzugt zu einem kugelförmigen vorderen Bereich der Aufnahmeöffnung. Dadurch erfolgt eine besonders effiziente Abstützung in Längsrichtung, so dass ein Verkanten besonders effizient verhindert werden kann.

Das Betätigungswerkzeug weist im Bereich des Zapfens korrespondierende Ausbildungen zu den Ausbildungen der Schraube auf.

Der Zapfen des Betätigungswerkzeugs weist entsprechende Führungsausnehmungen auf, die mit den Führungserhebungen der Aufnahmeöffnung korrespondieren. Dementsprechend sind die Führungsausnehmungen als die negativen Gegenstücke zu den Führungserhebungen der Schraube ausgebildet.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen:
Figur 1 zeigt schematisch eine Draufsicht auf einen Kraftangriff einer erfindungsgemäßen Schraube,
Figur 2 zeigt schematisch einen Querschnitt durch den Kopf der erfindungsgemäßen Schraube der Figur 1 entlang der dargestellten Schnittlinie,
Figur 3 zeigt schematisch die Schraube aus Figur 1, wobei der Kopf um den Winkel von 30° gedreht ist,
Figur 4 zeigt schematisch einen Querschnitt durch den Kopf der erfindungsgemäßen Schraube der Figur 3 entlang der dargestellten Schnittlinie,
Figur 5 zeigt schematisch eine Seitenansicht eines erfindungsgemäßen Betätigungswerkzeugs,
Figur 6 zeigt schematisch eine Draufsicht auf ein Sechsrundprofil und einen Zapfen des Betätigungswerkzeugs der Figur 5,
Figur 7 zeigt schematisch ein System aus einer erfindungsgemäßen Schraube und einem erfindungsgemäßen Betätigungswerkzeug und
Figur 8 zeigt schematisch das System der Figur 7, wobei das System um den Winkel von 30° gedreht ist.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

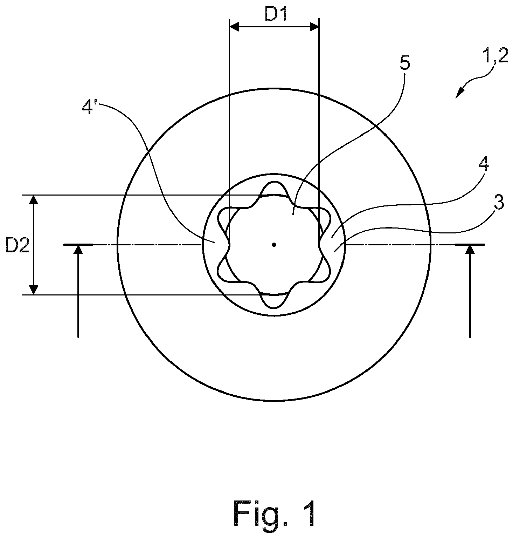

Die Figuren 1-4 zeigen eine erfindungsgemäße Schraube gemäß einer beispielhaften Ausführungsform.

Figur 1 zeigt schematisch eine Draufsicht auf eine erfindungsgemäße Schraube 1. Die Schraube 1 weist auf einen Kopf 2. Der Kopf 2 weist auf einen Kraftangriff 3 für ein Betätigungswerkzeug. Der Kraftangriff 3 weist ein herkömmliches Sechsrundprofil auf.

Das Sechsrundprofil weist auf einen Durchmesser D1 zwischen gegenüberliegend angeordneten Profilstücken 4,4'.

Des Weiteren weist der Kopf eine Aufnahmeöffnung 5 für einen nicht dargestellten Zapfen eines Betätigungswerkzeugs auf. Die Aufnahmeöffnung 5 weist einen Durchmesser D2 auf.

Erfindungsgemäß ist der Durchmesser D2 der Aufnahmeöffnung 5 größer als der Durchmesser D1 des Sechsrundprofils.

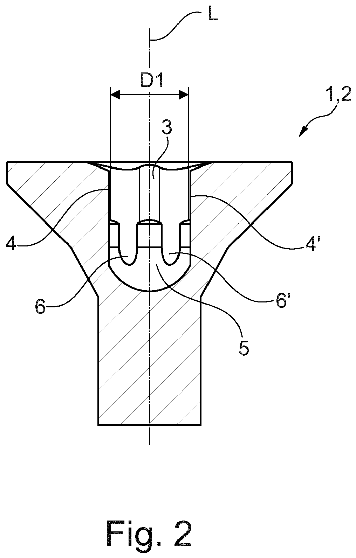

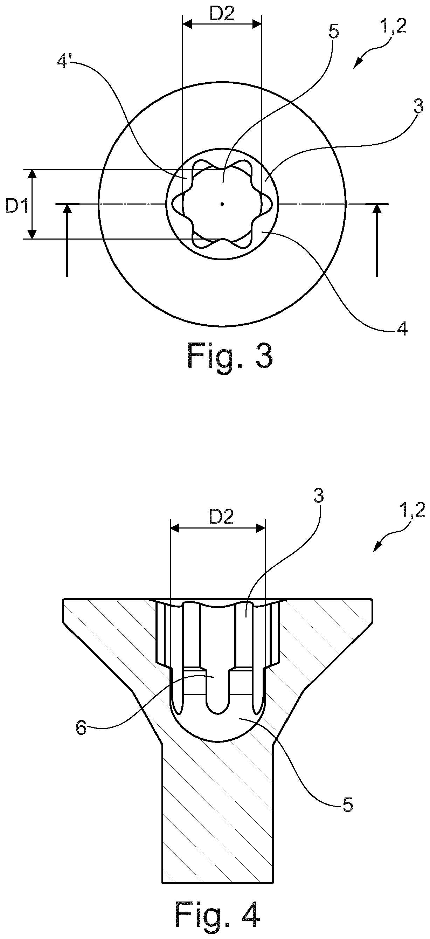

Zur besseren Veranschaulichung zeigt die Figur 2 schematisch einen Querschnitt durch den Kopf 2 der erfindungsgemäßen Schraube aus der Figur 1 entlang der dargestellten Schnittlinie. Figur 3 zeigt schematisch die Schraube 1 aus Figur 1, wobei der Kopf 2 um den Winkel von 30° gedreht ist. Figur 4 zeigt schematisch einen Querschnitt durch den Kopf 2 der erfindungsgemäßen Schraube 1 der Figur 3 entlang der dargestellten Schnittlinie.

Weiterhin ist in der Figur 2 ersichtlich, dass die Aufnahmeöffnung 5 kugelförmig ausgebildet ist. Die Aufnahmeöffnung 5 ist zunächst bereichsweise kreiszylinderförmig ausgebildet, wobei sich ein kugelförmiger Bereich anschließt.

Dementsprechend ist die Aufnahmeöffnung 5 im vordersten Bereich kugelförmig ausgebildet. Die Profilstücke 4,4' erstrecken sich als Führungserhebungen 6,6' in der Aufnahmeöffnung 5. Die Führungserhebungen 6,6' sind gleichmäßig über den Umfang der Aufnahmeöffnung 5 verteilt angeordnet, wobei sich sechs Führungserhebungen 6,6' entsprechend in einem Umfangswinkel von 60° voneinander beabstandet befinden.

Die Führungserhebungen 6,6' erstrecken sich in Längsrichtung L der Schraube 1 bis hin zu einem vorderen Bereich der Aufnahmeöffnung 5, wobei dieser vordere Bereich, wie bereits beschrieben, kugelförmig ausgebildet ist.

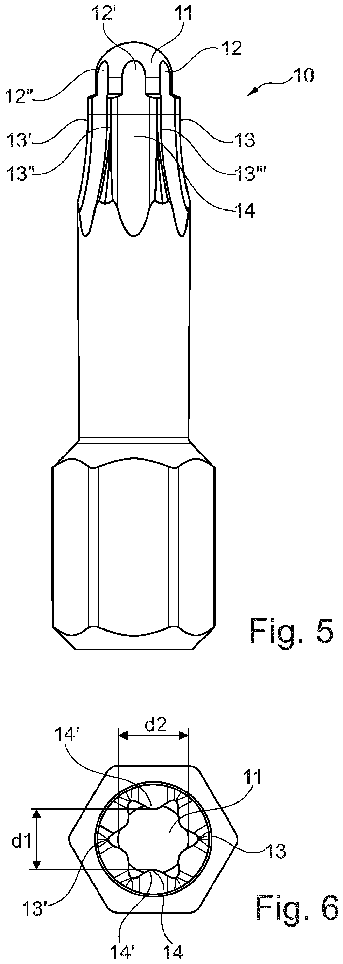

Figur 5 zeigt schematisch eine Seitenansicht eines erfindungsgemäßen Betätigungswerkzeugs, insbesondere eines Bits 10. Das Betätigungswerkzeug 10 weist herkömmlicherweise ein Sechsrundprofil auf, wobei das Sechsrundprofil herkömmlicherweise sechs Profilstücke 13,13',13",13‴ aufweist. Zwischen den Profilstücken 13,13',13",13‴ weist das Sechsrundprofil Ausnehmungen 14,14' auf.

Erfindungsgemäß weist das Betätigungswerkzeug 10 einen Zapfen 11 auf, wobei dieser Zapfen 11 mit der Aufnahmeöffnung 5 der erfindungsgemäßen Schraube korrespondiert. In dieser bevorzugten Ausführungsform ist somit der Zapfen 11 im vordersten Bereich kugelförmig ausgebildet.

Weiterhin weist der Zapfen 11 in dieser Ausführungsform sechs Führungsausnehmungen 12,12',12" auf, wobei diese Führungsausnehmungen 12,12', 12" mit den Führungserhebungen 6,6"der erfindungsgemäßen Schraube korrespondieren.

Die Führungsausnehmungen 12,12',12" erstrecken sich somit in den Zapfen aus den Ausnehmungen 14,14' des Sechsrundprofils hinaus.

Die Führungsausnehmungen 12 sind gleichmäßig über den Umfang des Zapfens 11 verteilt angeordnet. Analog zu den Führungserhebungen 6,6' der Schraube befinden sich sechs korrespondierende Führungsausnehmungen 12, 12',12" im Zapfen, wobei die Führungsausnehmungen 12,12',12" in einem Umfangswinkel von 60° voneinander beabstandet sind.

Die Führungsausnehmungen 12,12',12" erstrecken sich bis hin zu einem vorderen Bereich des Zapfens 11.

Im vordersten Bereich ist der Zapfen 11 kugelförmig ausgebildet.

Die Figur 6 zeigt schematisch eine Draufsicht auf das erfindungsgemäße Betätigungswerkzeug aus der Figur 5.

Erfindungsgemäß weist das Sechsrundprofil einen Durchmesser d1 zwischen gegenüberliegend angeordneten Ausnehmungen 14,14' auf. Der Zapfen 11 weist erfindungsgemäß einen Durchmesser d2 auf. Erfindungsgemäß ist der Durchmesser d2 des Zapfens 11 größer als der Durchmesser d1 des Sechsrundprofils des Betätigungswerkzeugs.

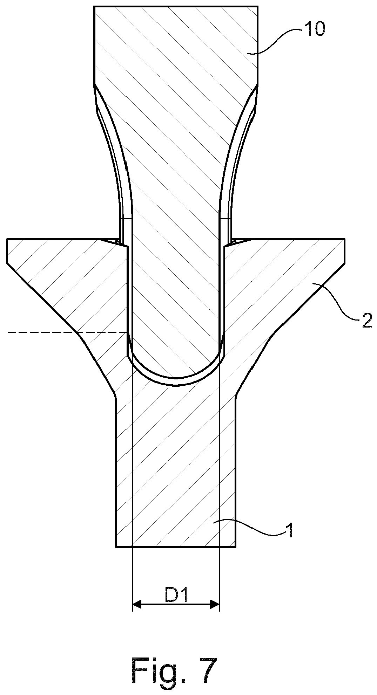

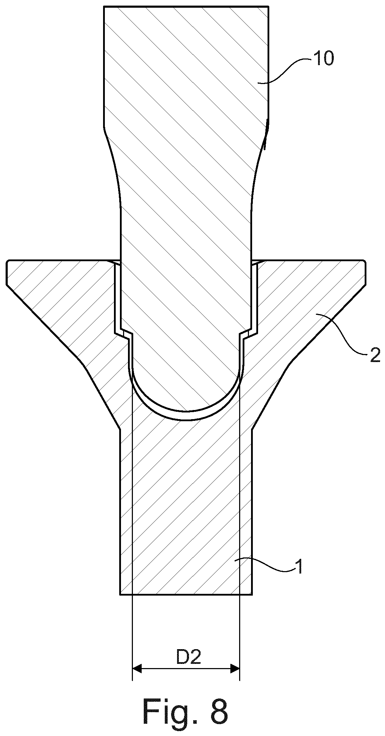

Figur 7 zeigt schematisch ein System aus der erfindungsgemäßen Schraube gemäß den Figuren 1-4 und dem erfindungsgemäßen Betätigungswerkzeug aus den Figuren 5-6. Figur 8 zeigt schematisch das System der Figur 7, wobei das System um den Winkel von 30° gedreht ist.

Erfindungsgemäß ist der Durchmesser D2 der Aufnahmeöffnung 5 größer als der Durchmesser D1 des Sechsrundprofils der Schraube. So wird vorteilhaft der optimale Sitz und das optimale Verhindern des Verkantens realisiert.

Die beschriebenen Ausführungsformen dienen lediglich der Illustration eines Beispiels der Erfindung. Diese Ausführungsbeispiele sollen den Grundgedanken der Erfindung in keiner Weise einschränken.

### Bezugszeichenliste

- 1: Schraube
- 2: Kopf
- 3: Kraftangriff
- 4,4': Profilstück
- 5: Aufnahmeöffnung
- 6,6': Führungserhebungen
- 10: Betätigungswerkzeug
- 11: Zapfen
- 12,12',12": Führungsausnehmungen
- 13,13',13",13‴: Profilstück
- 14,14': Ausnehmungen
- d1,d2: Durchmesser
- D1,D2: Durchmesser
- L: Längsachse/Längsrichtung

## Patentansprüche

1. Schraube (1), insbesondere Holzschraube, aufweisend einen Kopf (2) mit einem Kraftangriff (3) für ein Betätigungswerkzeug (10), wobei der Kraftangriff (3) ein Sechsrundprofil aufweist, wobei das Sechsrundprofil einen Durchmesser D1 zwischen gegenüberliegend angeordneten Profilstücken (4,4') aufweist,
wobei der Kopf (2) eine Aufnahmeöffnung (5) für einen Zapfen (11) des Betätigungswerkzeugs (10) aufweist, wobei die Aufnahmeöffnung (5) einen Durchmesser D2 aufweist,
**dadurch gekennzeichnet, dass** der Durchmesser D2 der Aufnahmeöffnung (5) größer ist als der Durchmesser D1 des Sechsrundprofils.

2. Schraube (1) gemäß Anspruch 1, wobei die Aufnahmeöffnung (5) zumindest teilweise rund, insbesondere elliptisch oder kugelförmig, ausgebildet ist.

3. Schraube (1) gemäß mindestens einem der vorhergehenden Ansprüche, wobei die Aufnahmeöffnung (5) bereichsweise kreiszylinderförmig ausgebildet ist, wobei sich ein kugelförmiger Bereich anschließt.

4. Schraube (1) gemäß mindestens einem der vorhergehenden Ansprüche, wobei die Aufnahmeöffnung (5) bevorzugt im vordersten Bereich rund, insbesondere elliptisch oder kugelförmig, ausgebildet ist.

5. Schraube (1) gemäß mindestens einem der vorhergehenden Ansprüche, wobei die Profilstücke (4,4') sich als Führungserhebungen (6,6') in der Aufnahmeöffnung (5) erstrecken.

6. Schraube (1) gemäß mindestens einem der vorhergehenden Ansprüche, wobei die Führungserhebungen (6,6') gleichmäßig über den Umfang der Aufnahmeöffnung (5) verteilt angeordnet sind, bevorzugt in einem Umfangswinkel von 60° voneinander beabstandet.

7. Schraube (1) gemäß mindestens einem der vorhergehenden Ansprüche, wobei die Führungserhebungen (6,6') sich in Längsrichtung (L) der Schraube (1) bis hin zu einem vorderen Bereich der Aufnahmeöffnung (5) erstrecken, bevorzugt zu einem kugelförmigen vorderen Bereich der Aufnahmeöffnung (5).

8. Schraube (1) gemäß mindestens einem der vorhergehenden Ansprüche, wobei im Durchmesser D2 tangentenstetig eine kugelförmige Spitze (5) ansetzt.

9. Betätigungswerkzeug (10), insbesondere zur Betätigung einer Schraube (1) nach mindestens einem der vorhergehenden Ansprüche, aufweisend ein Sechsrundprofil, wobei das Sechsrundprofil einen Durchmesser d1 zwischen gegenüberliegend angeordneten Ausnehmungen (14,14') aufweist, wobei das Betätigungswerkzeug (10) einen Zapfen (11) aufweist, wobei der Zapfen (11) einen Durchmesser d2 aufweist,
**dadurch gekennzeichnet, dass** der Durchmesser d2 des Zapfens (11) größer ist als der Durchmesser d1 des Sechsrundprofils.

10. System aus einer Schraube (1) gemäß mindestens einem der vorhergehenden Ansprüche und einem Betätigungswerkzeug (10) gemäß mindestens einem der vorhergehenden Ansprüche.
